# EUROPÄISCHE PATENTANMELDUNG

(11) **EP 4 620 661 A1**
(43) Veröffentlichungstag der Anmeldung: **24.09.2025**
(21) Anmeldenummer: 25161459.0
(22) Anmeldetag: 04.03.2025
(51) Int. Cl.: B29D 30/00, B60C 23/04

(54) **VORRICHTUNG ZUM AUTOMATISIERTEN AUFNEHMEN UND EINBRINGEN EINES HALTESTREIFENS EINER TRANSPONDEREINHEIT IN EINEN ROHREIFEN SOWIE ENTSPRECHENDES VERFAHREN**

(30) Priorität: 19.03.2024 DE 102024107818
(71) Anmelder: Continental Reifen Deutschland GmbH, 30175 Hannover (DE)
(72) Erfinder: Moreira, Artur, 4760-606 Lousado (PT); Sousa, Bruno, 4760-606 Lousado (PT)
(74) Vertreter: Continental Corporation

(57) **Zusammenfassung**

Die Erfindung betrifft eine Vorrichtung zum automatisierten Aufnehmen und Einbringen eines Haltestreifens (2) einer Transpondereinheit in einen Rohreifen, wobei der Haltestreifen (2) von einem länglichen Gummiabschnitt mit zwei Endbereichen (20, 21) und einer zwischen den Endbereichen (20, 21) ausgebildeten Durchgangsöffnung (23) gebildet ist und mit einem im Bereich der Durchgangsöffnung (23) quer zum Gummiabschnitt verlaufenden Trennstreifen (3) unterlegt ist, wobei die Vorrichtung einen Haltekopf (1) umfasst, der erste Saugstempel (10) aufweist, die so angeordnet und konfiguriert sind, dass sie jeweils auf einen Endbereich (10, 21) eines bereitgestellten Haltestreifens (2) in einer Aufsetzrichtung (R) aufsetzbar sind, um den Haltestreifen (2) bei Anlegen eines Unterdruckes anzusaugen und zwischen den ersten Saugstempeln (10) ein zweiter Saugstempel (11) vorgesehen ist, der so angeordnet und konfiguriert ist, dass er bei auf den Haltestreifen (2) aufgesetzten ersten Saugstempeln (10) auf die Durchgangsöffnung (23) des Haltestreifens (2) aufsetzbar ist, um bei Anlegen eines Unterdruckes den unterlegten Trennstreifen (3) durch die Durchgangsöffnung (23) des Haltestreifens (2) hindurch anzusaugen. Es wird ferner auch ein Verfahren zum automatisierten Aufnehmen und Einbringen eines Haltestreifens (2) einer elektromagnetischen Sende- und Empfangsvorrichtung in einen Rohreifen unter Einsatz einer derartigen Vorrichtung angegeben.

## Beschreibung

Die Erfindung betrifft eine Vorrichtung zum automatisierten Aufnehmen und Einbringen eines Haltestreifens einer Transpondereinheit in einen Rohreifen, wobei der Haltestreifen von einem länglichen Gummiabschnitt mit zwei Endbereichen und einer zwischen den Endbereichen ausgebildeten Durchgangsöffnung gebildet ist und mit einem im Bereich der Öffnung quer zum Gummiabschnitt verlaufenden Trennstreifen unterlegt ist.

Transponder werden im Reifen für verschiedene Aufgaben eingesetzt. Hierzu zählen insbesondere eine Reifenidentifikation, mit der der Hersteller beispielsweise schnell feststellen kann, aus welchem Reifenwerk ein bestimmter Reifen geliefert wurde. Andere Aufgaben können die Luftdrucküberwachung, Temperaturmessung oder Messung der zurückgelegten Laufleistung des Reifens umfassen. Übliche Transponder bestehen aus einem Elektronikbauteil, in welchem Sensorelemente angeordnet sind sowie aus einer an dieses Elektronikbauteil angeschlossenen Antenne. Insbesondere bei speziellen Anwendungen, beispielsweise "Off the Road"-Reifen (OTR) sowie Reifen für landwirtschaftliche Fahrzeuge der Anmelderin wird ein CPC-Sensor (ContiPressureCheck-Sensor) für die konstante Überwachung des Reifendrucks und der Temperatur standardmäßig verbaut.

Häufig werden diese Sensoren in einem vollständig manuellen Prozess in den bereits fertig hergestellten Reifen montiert, indem zunächst die vorgesehene Montagefläche im Bereich der Innenschicht des Reifens durch Abtragen von Material und anschließendes Reinigen vorbereitet wird und sodann der Sensor auf diese vorbereitete Montagefläche aufgeklebt wird. Dies erfolgt üblicherweise an einem zusätzlichen Arbeitsplatz im Endbearbeitungsbereich der Reifenherstellung. Es ist offensichtlich, dass ein solcher manueller Prozess schwierig und aufwendig durchzuführen ist, der zudem wenig ergonomisch ist und Sicherheitsrisiken für den Monteur birgt.

Es ist daher bereits vorgeschlagen worden, die Transpondereinheit in eine umschließenden Gummitasche einzubetten und anschließend wie einen Flicken auf der Innen- oder Außenseite eines fertig ausvulkanisierten Reifens aufzukleben. Die Anordnung der Transpondereinheit am Reifen mithilfe einer angeklebten Gummitasche besitzt jedoch den Nachteil, dass die Belebung schwierig zu realisieren ist. Der Reifen muss an der entsprechenden Stelle ebenfalls manuell aufgebaut werden und die Klebung besitzt häufig nur eine begrenzte Haltbarkeit, da der Reifen im Betriebszustand eine erhebliche Dauerbeanspruchung auf die Verklebung ausübt.

Ein direktes Einvulkanisieren der Transpondereinheit wurde ebenfalls vorgeschlagen, hat jedoch den Nachteil, dass die beim Vulkanisationsprozess entstehenden hohen Temperaturen die Elektronik des Transponders zerstören können.

Es ist daher bereits verschiedentlich vorgeschlagen worden, einen Haltestreifen, der einen länglichen Gummiabschnitt mit zwei Endbereichen und eine zwischen den Endbereichen ausgebildeten Durchgangsöffnung aufweist, in einen Rohreifen während des Zusammenbaus desselben einzubringen und gemeinsam mit dem Rohreifen zum fertigen Reifen zu vulkanisieren, sodass der Haltestreifen vorzugsweise im Bereich der Innenschicht dauerhaft mit der Innenschicht verbunden ist und anschließend im fertigen Reifen die Transpondereinheit im Bereich der Durchgangsöffnung des Haltestreifens einzustecken. Aus der EP 1 318 032 A2 ist es diesbezüglich bekannt, den Haltestreifen mit einem herausziehbaren Trennstreifen zu versehen, der nach Herstellung des Reifens zwischen Haltestreifen und Innenschicht herausgezogen wird, sodass eine Tasche gebildet wird, in die die Transpondereinheit eingesteckt wird.

Darauf aufbauend wurde bereits ein Haltestreifen vorgeschlagen, der auf die Innenschicht eines Rohreifens aufgebracht wird und aus einem länglichen Gummiabschnitt mit zwei Endbereichen gebildet ist, zwischen denen eine Durchgangsöffnung vorgesehen ist der Haltestreifen von einem quer zum Gummiabschnitt verlaufenden Trennstreifen unterlegt ist, um die Tasche unterhalb der Durchgangsöffnung auszubilden.

Insbesondere bei großformatigen Reifen, wie sie bei "off-the-road"-Reifen (OTR) sowie Reifen für landwirtschaftliche Fahrzeuge üblich sind, ist jedoch das manuelle Aufbringen des Haltestreifens mitsamt des quer zum Gummiabschnitt verlaufenden Trennstreifens in den Rohreifen schwierig und aufwendig durchzuführen und aufgrund geringer Ergonomie für Anwendung in einem industriellen Prozess ungeeignet.

Aufgabe der Erfindung ist es, eine Vorrichtung sowie ein zugehöriges Verfahren zum automatisierten Aufnehmen und Einbringen eines solchen Haltestreifens einer Transpondereinheit in einen Rohreifen vorzuschlagen, welche die Nachteile des Standes der Technik überwinden.

Zur Lösung der gestellten Aufgabe wird erfindungsgemäß die Ausgestaltung einer Vorrichtung gemäß den Merkmalen des Patentanspruches 1 vorgeschlagen.

Ein Verfahren zur Lösung der gestellten Aufgabe unter Einsatz einer erfindungsgemäßen Vorrichtung ist Gegenstand des Patentanspruchs 7.

Vorteilhafte Ausgestaltungen und Weiterbildungen der Erfindung sind Gegenstand der abhängigen Ansprüche.

Zur Lösung der gestellten Aufgabe wird eine Vorrichtung zum automatisierten Aufnehmen und Einbringen eines Haltestreifens einer Transpondereinheit in einen Rohreifen vorgeschlagen, die auf einer spezifischen Ausgestaltung des Haltestreifens beruht. Dieser im Rahmen der Erfindung eingesetzte Haltestreifen umfasst einen länglichen Gummiabschnitt mit zwei Endbereichen und einer zwischen den Endbereichen ausgebildeten Durchgangsöffnung und ist mit einem im Bereich der Durchgangsöffnung quer zum Gummiabschnitt verlaufenden Trennstreifen unterlegt. Der Trennstreifen ist beispielsweise aus geeignetem Papier gebildet und kommt beim Anbringen des Haltestreifens am vorgesehenen Montageort im Rohreifen, vorzugsweise im Bereich der Innenschicht im Bereich der Durchgangsöffnung zwischen Haltestreifen und Innenschicht zum Liegen und verhindert dort ein Anhaften des Haltestreifens an der Innenschicht. Insoweit wird der Haltestreifen lediglich an den Kontaktflächen der beiden Endbereiche mit der Innenschicht verbunden und nach Fertigstellung des Reifens kann der Trennstreifen zwischen Haltestreifen und Innenschicht herausgezogen werden, sodass eine Tasche gebildet wird, in der die Transpondereinheit dauerhaft angeordnet und in der Durchgangsöffnung verliersicher gehalten werden kann.

Da ein manuelles Einbringen eines solchen Haltestreifens in einen Rohreifen aufgrund der üblicherweise hohen Gewichte sowie der großen Abmessungen entsprechender Rohreifen für landwirtschaftliche oder "off-the-road"-Anwendungen sehr schwierig und mit schlechter Ergonomie durchzuführen ist, schlägt die Erfindung eine Vorrichtung vor, die einen Haltekopf umfasst, der erste Saugstempel aufweist, die so angeordnet und konfiguriert sind, dass sie jeweils auf einen Endbereich eines bereitgestellten Haltestreifens in einer Aufsetzrichtung aufsetzbar sind, um den Haltestreifen bei Anlegen eines Unterdrucks anzusaugen und zwischen den ersten Saugstempeln ein zweiter Saugstempel vorgesehen ist, der so angeordnet und konfiguriert ist, dass er bei auf den Haltestreifen aufgesetzten ersten Saugstempeln auf die Durchgangsöffnung des Haltestreifens aufsetzbar ist, um bei Anlegen eines Unterdrucks den unterlegten Trennstreifen durch die Durchgangsöffnung des Haltestreifens hindurch anzusaugen.

Erfindungsgemäß ist die Vorrichtung damit in der Lage, einen bereitgestellten Haltestreifen mitsamt des unterlegten Trennstreifens gemeinsam aufzunehmen und in der gewünschten Konfiguration, in der sich der Trennstreifen im Bereich der Durchgangsöffnung quer zum Haltestreifen erstreckt, an einen vorgesehenen Montageort, beispielsweise an den mittleren Bereich der Innenschicht eines Rohreifens zu verbringen und dort in der gewünschten Weise unter Zwischenlage des Trennstreifens automatisiert anzubringen. Dies kann insbesondere mit einem entsprechend gesteuerten mehrachsigen Handhabungsroboter bewirkt werden, und zwar unabhängig von der konkreten Reifengröße bei sämtlichen Rohreifen, die für die Einbringung eines Haltestreifens einer Transpondereinheit vorgesehen sind.

Sobald der endseitig mit den ersten Saugstempeln angesaugte Haltestreifen mitsamt dem quer dazu verlaufenden und durch die Durchgangsöffnung vom zweiten Saugstempel angesaugten Trennstreifen in den Rohreifen eingebracht ist, wird der Haltestreifen an den nicht vom Trennstreifen unterlegten Endbereichen an die Innenschicht unter Aufbringung eines Anpressdruckes angepresst und fixiert, so dass anschließend die Beaufschlagung der Saugstempel mit Unterdruck aufgehoben und der insoweit freigegebene Haltekopf vom Haltestreifen abgehoben und aus dem Rohreifen herausgeführt werden kann, um den Vorgang von neuem bei einem weiteren Rohreifen zu beginnen.

Nach einem Vorschlag der Erfindung ist vorgesehen, dass benachbart zu den ersten Saugstempeln jeweils Andruckrollen für die Endbereiche des Haltestreifens angeordnet und Verstellmittel vorgesehen sind, um die Saugstempel und die Andruckrollen relativ zueinander in und entgegen der Aufsetzrichtung zu bewegen. Mittels der Andruckrollen werden die Endbereiche des Haltestreifens mit der gewünschten Andruckkraft an den vorgesehenen Montageort des Rohreifens, insbesondere die Innenschicht angerollt. Auch dies kann von einem entsprechenden mehrachsigen Roboter, welcher den erfindungsgemäßen Haltekopf trägt, ausgeführt werden. Durch die Verstellmittel wird sichergestellt, dass die Andruckrollen gesteuert mit dem Haltestreifen in Eingriff kommen, wenn die Saugstempel bereits vom Haltestreifen abgehoben sind.

Als Verstellmittel kommen beispielsweise Pneumatikzylinder in Betracht, die die Saugstempel und/oder die Andruckrollen in und entgegen der Aufsetzrichtung bewegen.

Nach einem weiteren Vorschlag der Erfindung ist vorgesehen, dass die Andruckrollen unabhängig voneinander entgegen der Aufsetzrichtung federnd gelagert sind. Durch diese federnde Lagerung kann beispielsweise die charakteristische konkave innenseitige Krümmung der Innenschicht eines Rohreifens ausgeglichen werden, wenn mittels der Andruckrollen der Haltestreifen an der Innenschicht angerollt wird.

Der Haltekopf kann einen mit einer Unterdruckquelle abschaltbar verbindbaren Haltebalken umfassen, an welchem die ersten und zweiten Saugstempel befestigt und mit der Unterdruckquelle verbindbar sind. Neben einem vereinfachten Aufbau wird durch eine solche Ausgestaltung auch sichergestellt, dass sämtliche Saugstempel synchron in und entgegen der Aufsetzrichtung bewegt und mit Unterdruck beaufschlagt werden.

Nach einem weiteren Vorschlag der Erfindung sind die ersten und zweiten Saugstempel auf einer gemeinsamen Linie angeordnet.

Schließlich ist es nach einem Vorschlag der Erfindung vorgesehen, dass der Haltekopf einen Befestigungsflansch zur Befestigung an einem mehrachsigen Handhabungsroboter aufweist.

Das erfindungsgemäße Verfahren zum automatisierten Aufnehmen und Einbringen eines Haltestreifens einer Transpondereinheit in einen Rohreifen unter Einsatz einer vorangehend erläuterten Vorrichtung umfasst das Bereitstellen eines Haltestreifens, der von einem länglichen Gummiabschnitt mit zwei Endbereichen und einer zwischen den Endbereichen ausgebildeten Durchgangsöffnung gebildet ist und mit einem im Bereich der Durchgangsöffnung quer zum Gummiabschnitt verlaufenden Trennstreifen unterlegt ist, Aufsetzen der ersten Saugstempel der Vorrichtung jeweils auf einen Endbereich des bereitgestellten Haltestreifens in einer Aufsetzrichtung und Anlegen eines Unterdruckes, um die Endbereiche des Haltestreifens anzusaugen sowie Aufsetzen des zweiten Saugstempels der Vorrichtung auf die Durchgangsöffnung des Haltestreifens und Anlegen eines Unterdrucks, um den unterlegten Trennstreifen durch die Durchgangsöffnung des Haltestreifens hindurch anzusaugen, ferner nachfolgendes Einbringen des angesaugten Haltestreifens in den Rohreifen und Andrücken am Rohreifen unter Zwischenlage des Trennstreifens.

Insbesondere kann der angedrückte Haltestreifen durch Abschalten des Unterdrucks freigegeben werden und die Saugstempel werden dann vom Haltestreifen abgehoben, wozu entsprechende Verstellmittel vorgesehen sind, während die Endbereiche durch Aufbringen einer Andruckkraft mit dem Reifenrohling verbunden werden.

Die Andruckkraft kann nach einem Vorschlag der Erfindung durch Anrollen mittels benachbart zu den ersten Saugstempeln angeordneten Andruckrollen aufgebracht werden.

Das Aufsetzen der ersten und zweiten Saugstempel sowie das Anlegen eines Unterdruckes an diesen wird nach einem Vorschlag der Erfindung gleichzeitig bewirkt.

Weitere Einzelheiten und Ausgestaltungen der erfindungsgemäßen Vorrichtung und des Verfahrens werden nachfolgend anhand der ein Ausführungsbeispiel darstellenden Zeichnung erläutert. Es zeigen:
- Figur 1: eine perspektivische Darstellung einer erfindungsgemäßen Vorrichtung;
- Figur 2: die Betriebsweise der Vorrichtung gemäß Figur 1.

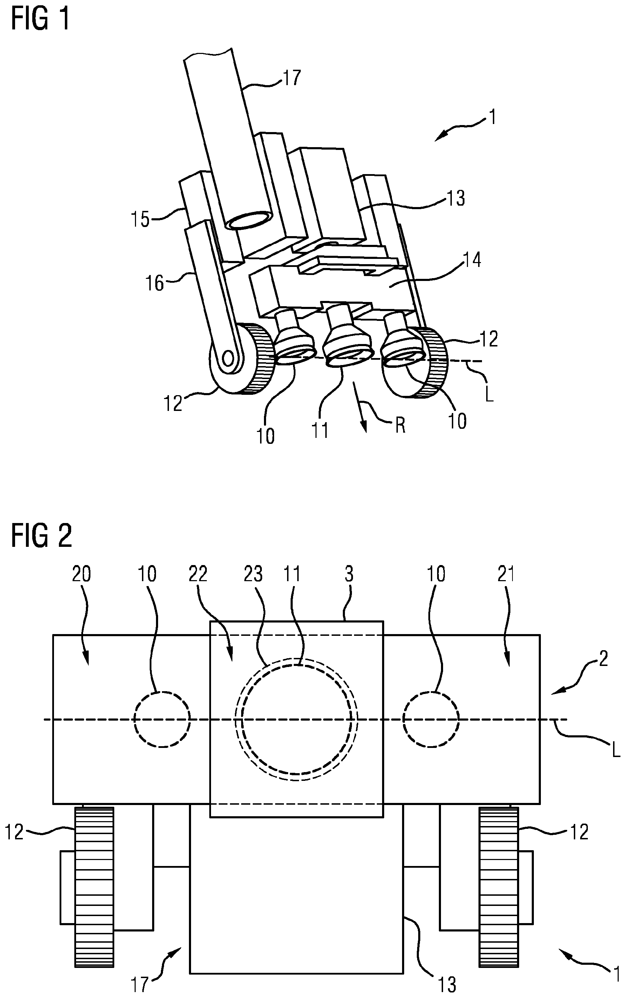

Aus der Figur 1 ist eine Vorrichtung zum automatisierten Aufnehmen und Einbringen eines Haltestreifens einer Transpondereinheit in einen Rohreifen ersichtlich, die einen an die Konfiguration des nicht dargestellten Haltestreifens angepassten Haltekopf 1 umfasst, der mit einem Befestigungsflansch 17 an einem hier nicht dargestellten mehrachsigen Handhabungsroboter angebracht und von diesem bewegt werden kann.

Auf der dem Befestigungsflansch 17 gegenüberliegenden Unterseite des Haltekopfes 1 sind auf einer gemeinsamen Linie L drei erste und zweite Saugstempel 10, 11 angeordnet, wobei der zweite Saugstempel 11 zwischen den beiden ersten, äußeren Saugstempeln 10 auf der Linie L positioniert ist. Die Saugstempel 10, 11 sind an einem gemeinsamen Haltebalken 14 befestigt und mittels eines Pneumatikzylinders 13 in einer Aufsetzrichtung R nach unten bzw. entgegengesetzt nach oben verfahrbar.

In nicht dargestellter Weise ist zudem der Haltebalken 14 mit einer hier nicht dargestellten schaltbaren Unterdruckquelle verbunden, über die die Saugstempel 10, 11 gleichzeitig mit entsprechendem Unterdruck beaufschlagbar bzw. gleichzeitig von diesem abschaltbar sind.

Neben den beiden ersten Saugstempeln 10 sind zudem Andruckrollen 12 vorgesehen, die über je einen Haltearm 16 an Federlagern 15 elastisch vorgespannt sind und entgegen der Aufsetzrichtung R unabhängig voneinander federnd gelagert sind.

Der aus der Figur 1 ersichtliche Haltekopf 1 dient, sofern er an einem mehrachsigen Handhabungsroboter befestigt und von diesem entsprechend bewegt wird, dazu, einen spezifisch ausgebildeten Haltestreifen 2, wie er aus der Figur 2 ersichtlich ist, aufzunehmen und an seinen Montageort zu verbringen.

Der Haltestreifen 2 wird von einem länglichen Gummiabschnitt bzw. Gummistreifen mit zwei entgegengesetzt angeordneten Endbereichen 20, 21 und einem dazwischen befindlichen mittleren Bereich 22 gebildet, der die beiden Endbereiche 20, 21 verbindet. In diesem mittleren Bereich 22 ist zentral eine Durchgangsöffnung 23 angeordnet, die so ausgebildet ist, dass eine hier nicht dargestellte Transpondereinheit darin aufgenommen werden kann, wenn der Haltestreifen 2 in einem nicht dargestellten Reifen, vorzugsweise im Bereich der Innenschicht befestigt ist und im mittleren Bereich 22 nicht an der Innenschicht befestigt ist, sondern eine Tasche ausbildet, in der die Transpondereinheit angeordnet wird.

Es ist insoweit erforderlich, den Haltestreifen 2 bereits so in den Rohreifen einzubringen und dort an dem vorgesehenen Montageort zu befestigen, dass lediglich die beiden Endbereiche 20, 21 mit dem Rohreifen verbunden werden, im mittleren Bereich 22, in welchem die Durchgangsöffnung 23 angeordnet ist, jedoch keine Verbindung zum Rohreifen hergestellt wird.

Um dies zu erreichen, ist der Haltestreifen 2 im mittleren Bereich 22, d. h. die Durchgangsöffnung 23 umgebend von einem Trennstreifen 3 unterlegt, der quer zum Gummiabschnitt verläuft und beispielsweise von einem Papier, etwa einem silikonisierten Trennpapier gebildet ist.

Zum gewünschten automatisierten Aufnehmen und Einbringen eines solchen geeignet bereitgestellten Haltestreifens 2 mit unterlegtem Trennstreifen 3 wird der bereits anhand der Figur 1 erläuterte Haltekopf 1 auf den Haltestreifen 2 aufgesetzt, wobei durch die Anordnung der ersten und zweiten Saugstempel 10, 11 gewährleistet wird, dass die ersten Saugstempel 10 jeweils auf einen Endbereich 20, 21 des bereitgestellten Haltestreifens 2 in der Aufsetzrichtung R aufgesetzt werden. Zugleich wird der zwischen den ersten Saugstempeln 10 angeordnete zweite Saugstempel 11 im mittleren Bereich 22 des Haltestreifens 2 auf der Durchgangsöffnung 23 aufgesetzt.

Anschließend werden alle Saugstempel 10, 11 mit Unterdruck über den Haltebalken 14 beaufschlagt, sodass die ersten Saugstempel 10 entsprechend die jeweiligen Endbereiche 20, 21 des Haltestreifens 2 ansaugen, um den Haltestreifen 2 aus der bereitgestellten Position aufzunehmen und am Haltekopf 1 gehalten zum Montageort zu transportieren.

Zugleich saugt der zweite Saugstempel 11 infolge seiner Positionierung auf der Durchgangsöffnung 23 durch diese Durchgangsöffnung 23 hindurch den unterlegten Trennstreifen 3 an, der insoweit gemeinsam mit dem Haltestreifen 2 in der bereitgestellten Orientierung quer zum Haltestreifen 2 aufgenommen und am Haltekopf 1 gehalten zum Montageort transportiert werden kann.

Sobald der Haltekopf 1 mit dem angesaugten Haltestreifens 2 und Trennstreifen 3 in den entsprechend bereitgestellten Rohreifen eingebracht ist, wird der Haltekopf 1 mit daran gehaltenem Haltestreifen 2 und Trennstreifen 3 auf den vorgesehenen Montageort, beispielsweise die Innenschicht des Rohreifens aufgesetzt, wobei der Trennstreifen 3 unterhalb des Haltestreifens 2 verläuft und der Haltestreifen 2 lediglich im Bereich der Endbereiche 20, 21 unmittelbar auf den Montageort, insbesondere die Innenschicht des Rohreifens aufgesetzt wird. Üblicherweise tritt in diesem Zustand bereits eine geringe selbsttätige Haftung zwischen dem Rohreifen bzw. dessen Innenschicht und den Endbereichen 20, 21 des Haltestreifens 2 ein, die nachfolgend durch Aufsetzen der Andruckrollen 12 auf die Endbereiche 20, 21 gesteigert wird. Die Saugstempel 10, 11 werden über den Haltebalken 14 von den dafür vorgesehenen Verstellmitteln 13, beispielsweise einem Pneumatikzylinder, entgegen der Aufsetzrichtung R zurückgezogen und vom Haltestreifen 2 abgehoben, sodass anschließend die Endbereiche 20, 21 des Haltestreifens 2 von den Andruckrollen 12 mit einer geeigneten Anpresskraft am Rohreifen, insbesondere dessen Innenschicht angerollt werden können.

Da beide Andruckrollen 12 unabhängig voneinander entgegen der Aufsetzrichtung R federnd über die Haltearme 16 in Federlagern 15 gelagert sind, kann die konkave Krümmung der Innenschicht bei diesem Anrollvorgang ausgeglichen werden.

Im mittleren Bereich 22 des Haltestreifens 2 verhindert der unterlegte Trennstreifen 3 zuverlässig eine Anhaftung des Haltestreifens 2 am Rohreifen, sodass die gewünschte Tasche unterhalb der Durchgangsöffnung 23 ausgebildet und auch während der nachfolgenden Vulkanisation zum fertigen Reifen aufrechterhalten wird.

Sobald aus dem solchermaßen vorbereiteten Rohreifen durch Vulkanisation der endgültige Reifen fertiggestellt worden ist, kann der Trennstreifen 3 zwischen Haltestreifen 2 und Innenschicht des Reifens herausgezogen und die Transpondereinheit in der solchermaßen gebildeten Tasche zwischen Haltestreifen 2 und Innenschicht des Reifens angeordnet werden.

Es ist offensichtlich, dass mit dem vorangehend erläuterten Haltekopf 1 Haltestreifen 2 einer Transpondereinheit automatisiert aufgenommen und in einen nahezu beliebig dimensionierten Rohreifen eingebracht und appliziert werden können.

### Bezugszeichenliste:

- 1:: Haltekopf
- 2:: Haltestreifen
- 3:: Trennstreifen
- 10:: erste Saugstempel
- 11:: zweiter Saugstempel
- 12:: Andruckrollen
- 13:: Verstellmittel
- 14:: Haltebalken
- 15:: Federlager
- 16:: Haltearm
- 17:: Befestigungsflansch
- 20:: Endbereich
- 21:: Endbereich
- 22:: mittlerer Bereich
- 23: Durchgangsöffnung

- R:: Aufsetzrichtung
- L:: Linie

## Patentansprüche

1. Vorrichtung zum automatisierten Aufnehmen und Einbringen eines Haltestreifens (2) einer Transpondereinheit in einen Rohreifen, wobei der Haltestreifen (2) von einem länglichen Gummiabschnitt mit zwei Endbereichen (20, 21) und einer zwischen den Endbereichen (20, 21) ausgebildeten Durchgangsöffnung (23) gebildet ist und mit einem im Bereich der Durchgangsöffnung (23) quer zum Gummiabschnitt verlaufenden Trennstreifen (3) unterlegt ist, wobei die Vorrichtung einen Haltekopf (1) umfasst, der erste Saugstempel (10) aufweist, die so angeordnet und konfiguriert sind, dass sie jeweils auf einen Endbereich (20, 21) eines bereitgestellten Haltestreifens (2) in einer Aufsetzrichtung (R) aufsetzbar sind, um den Haltestreifen (2) bei Anlegen eines Unterdruckes anzusaugen und zwischen den ersten Saugstempeln (10) ein zweiter Saugstempel (11) vorgesehen ist, der so angeordnet und konfiguriert ist, dass er bei auf den Haltestreifen (2) aufgesetzten ersten Saugstempeln (10) auf die Durchgangsöffnung (23) des Haltestreifens (2) aufsetzbar ist, um bei Anlegen eines Unterdruckes den unterlegten Trennstreifen (3) durch die Durchgangsöffnung (23) des Haltestreifens (2) hindurch anzusaugen.

2. Vorrichtung nach Anspruch 1, **dadurch gekennzeichnet, dass** benachbart zu den ersten Saugstempeln (10) jeweils Andruckrollen (12) für die Endbereiche (20, 21) des Haltestreifens (2) angeordnet und Verstellmittel (13) vorgesehen sind, um die Saugstempel (10, 11) und die Andruckrollen (12) relativ zueinander in und entgegen der Aufsetzrichtung (R) zu bewegen.

3. Vorrichtung nach Anspruch 2, **dadurch gekennzeichnet, dass** die Andruckrollen (12) unabhängig voneinander entgegen der Aufsetzrichtung (R) federnd gelagert sind.

4. Vorrichtung nach einem der Ansprüche 1 bis 3, **dadurch gekennzeichnet, dass** der Haltekopf (1) einen mit einer Unterdruckquelle schaltbar verbindbaren Haltebalken (14) umfasst, an welchem die ersten und zweiten Saugstempel (10, 11) befestigt und mit der Unterdruckquelle verbindbar sind.

5. Vorrichtung nach einem der Ansprüche 1 bis 4, **dadurch gekennzeichnet, dass** die ersten und zweiten Saugstempel (10, 11) auf einer gemeinsamen Linie (L) angeordnet sind.

6. Vorrichtung nach einem der Ansprüche 1 bis 5, **dadurch gekennzeichnet, dass** der Haltekopf (1) einen Befestigungsflansch (17) zur Befestigung an einem mehrachsigen Handhabungsroboter aufweist.

7. Verfahren zum automatisierten Aufnehmen und Einbringen eines Haltestreifens (2) einer Transpondereinheit in einen Rohreifen unter Einsatz einer Vorrichtung gemäß einem der vorangehenden Ansprüche, umfassend das Bereitstellen eines Haltestreifens (2), der von einem länglichen Gummiabschnitt mit zwei Endbereichen (20, 21) und einer zwischen den Endbereichen (20, 21) ausgebildeten Durchgangsöffnung (23) gebildet ist und mit einem im Bereich der Durchgangsöffnung (23) quer zum Gummiabschnitt verlaufenden Trennstreifen (3) unterlegt ist, Aufsetzen der ersten Saugstempel (10) der Vorrichtung jeweils auf einen Endbereich (20, 21) des bereitgestellten Haltestreifens (2) in einer Aufsetzrichtung (R) und Anlegen eines Unterdruckes, um die Endbereiche (20, 21) des Haltestreifens (2) anzusaugen und Aufsetzen des zweiten Saugstempels (11) der Vorrichtung auf die Durchgangsöffnung (23) des Haltestreifens (2) und Anlegen eines Unterdruckes, um den unterlegten Trennstreifen (3) durch die Durchgangsöffnung (23) des Haltestreifens (2) hindurch anzusaugen, sowie nachfolgendes Einbringen des angesaugten Haltestreifens (2) in den Rohreifen und Andrücken am Rohreifen unter Zwischenlage des Trennstreifens (3).

8. Verfahren nach Anspruch 7, **dadurch gekennzeichnet, dass** der angedrückte Haltestreifen (2) durch Abschalten des Unterdrucks freigegeben wird und die Saugstempel (10, 11) vom Haltestreifen (2) abgehoben werden und die Endbereiche (20, 21) durch Aufbringen einer Andruckkraft mit dem Reifenrohling verbunden werden.

9. Verfahren nach Anspruch 8, **dadurch gekennzeichnet, dass** die Andruckkraft durch Anrollen mittels benachbart zu den ersten Saugstempeln (10) angeordneten Andruckrollen (12) aufgebracht wird.

10. Verfahren nach einem der Ansprüche 7 bis 9, **dadurch gekennzeichnet, dass** das Aufsetzen der ersten und zweiten Saugstempel (10, 11) und das Anlegen eines Unterdruckes an diesen gleichzeitig bewirkt wird.
